# EUROPEAN PATENT APPLICATION

(11) **EP 1 156 625 A2**
(43) Date of publication of application: **21.11.2001**
(21) Application number: 01111227.3
(22) Date of filing: 15.05.2001
(51) Int. Cl.: H04L 12/46

(54) **Communication system, communication control method and control program storage medium**

(30) Priority: 17.05.2000 JP 2000144234
(71) Applicant: NEC CORPORATION, Tokyo (JP)
(72) Inventor: Kawakami, Hiroyuki, Minato-ku, Tokyo (JP)
(74) Representative: Baronetzky, Klaus, Dipl.-Ing.

(57) **Abstract**

A communication system, a communication control method and a control program storage medium do not require loading of BGP for customer node and edge node and can prevent increasing of load. The communication system establishes a virtual private network for communication between a plurality of customer networks by forming a tunnel on a provider network. Edge communication devices are connected at input and output ends of the tunnel. The edge communication device has terminating means for terminating a routing protocol used in the customer network.

## Description

### BACKGROUND OF THE INVENTION

### Field of the Invention

The present invention relates generally to a communication system, a communication control method and a storage medium for storing a control program. More specifically, the invention relates to a communication systemestablishing a virtual private network (VPN) for communication between a plurality of customer networks by forming tunnel on a provider network.

### Description of the Related Art

Concerning establishment of VPN (Virtual Private Network) employing encapsulating technology, there has been proposed a communication system employing MPLS (Multi Protocol Label Switch) in a provider network by Cisco Inc. Discussion will be given for such VPN technology. VPN is a network, in which logical groups are established on a public communication network, such as internet or the like with a function for maintaining a closing performance between the groups. To such public communication network, such as internet or the like, unspecified number users are connected, in general. Therefore, it is not basically possible to establish communication between specific users to encounter a problem in security since unauthorized access by a third party is unavoidable.

Therefore, by providing an end-to-end security measure in the recent years, VPN technology virtually establishing a private line on internet for using as a basic truck for connection between LANs (Local Area Network) is paid attention. More particularly, with providing encryption of data in end-to-end basis, and security measure, such as user authentication, access control and so forth, specific points are connected through internet to provide a group with closing performance.

By realizing such VPN on the public communication network, communication only between specific users becomes possible to enable use of internet or the like as virtual private line. Concerning such VPN system, there are disclosure in Japanese Unexamined Patent Publication No. Heisei 10-70566, Japanese Unexamined Patent Publication No. Heisei 11-355272 and so forth.

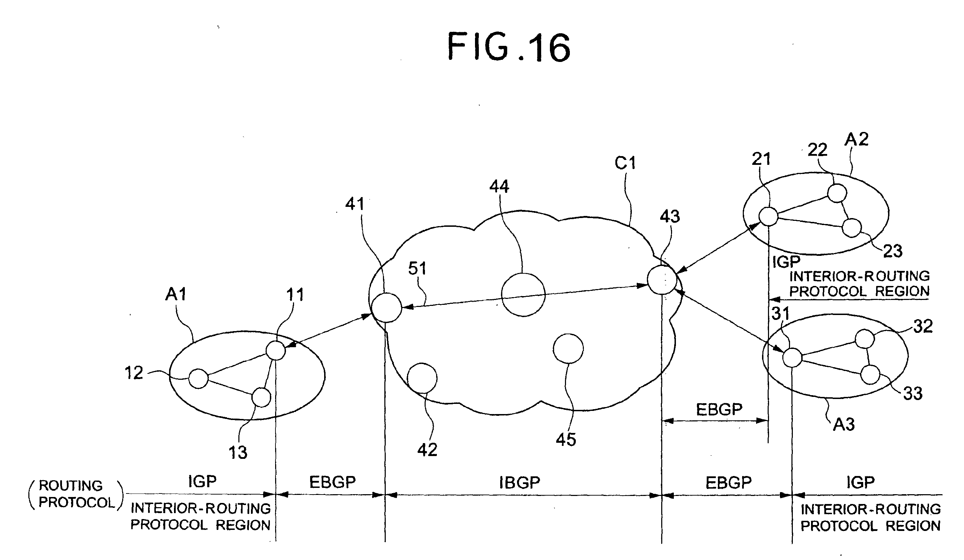

Fig. 16 is a schematic block diagram of a communication system using such VPN. In Fig. 16, there are customer networks A1 to A3 as groups having closing performance, such as LAN or the like, and provider network C1, such as internet or the like. The customer network A1 includes customer communication devices (hereinafter, the communication device will be simply referred to as "node") 11 to 13. Also, the customer network A2 includes customer nodes 21 to 23. Furthermore, the customer network A3 includes customer nodes 31 to 33. Then, in the provider network C1, edge nodes 41 to 43 are provided at borders with the customer networks. Also, core nodes 44 and 45 are provided at locations other than borders. In Fig. 16, the edge node 41 is provided on the border with the customer network A1, and the edge node 42 is provided on the border with the customer networks A2 and A3, respectively.

In this case, communication between the customer networks A1, A2 and A3 is performed through VPN established by a tunnel 51 formed between the edge nodes. At this time, a relationship of protocol for routing is as illustrated. Namely, in the customer networks A1 to A3, such as LAN or the like, IGP (Interior Gateway Protocol) as interior routing protocol is employed. In the provider network C1, IBGP (Interior Border Gateway Protocol) is employed. In the interface portion between these networks, EBGP (Exterior Border Gateway Protocol) is employed.

As a problem in the conventional VPN communication system, at the border between the customer networks A1 to A3 as groups having closing performance, such as LAN or the like and the provider network C1, such as internet or the like, EBGP is used. Therefore, it becomes necessary for providing setting enabling communication with the customer node and the edge node by BGP (Border Gateway Protocol). This requires loading of BGP to the customer node as well as knowledge of the customer for BGP for receiving service, to increase load.

On the other hand, in such VPN, since EBGP is used at the border between the customer network and the provider network, it becomes impossible to establish so-called multi-homing construction between the customer network and the provider network. Accordingly, for example, when the belonging edge node stops or when link breakage is caused in the belonging interface portion, interruption of communication is caused in the customer network under control to lead lowering of reliability.

Furthermore, in a MPLS network as provider network, route information is transmitted by BGP. Therefore, OSPF (Open Shortest Path First) information of OSPF as a routing protocol to be used in the customer network does not pass through to split OSPF domains. Particularly, as in the system for establishing IP network on the private line using ATM (Asynchronous Transfer Mode), FR (Frame Relay), despite of importance for connection of each customer network by a single OSPF domain, in the system shown in Fig. 16, OSPF domain is split to make it impossible to connect each customer network with single OSPF domain.

### SUMMARY OF THE INVENTION

An object of the present invention is to provide a communication system, a communication control method and a control program storage medium which do not require loading of BGP for customer node and edge node and can prevent increasing of load.

Another object of the present invention is to provide a communication system, a communication control method and a control program storage medium which enables establishment of multi-homing between a customer network and a provider network to improve reliability.

A further object of the present invention is to provide a communication system, a communication control method and a control program storage medium which can avoid splitting of OSPF domain and enables connection of each customer network with a single OSPF domain.

According to the first aspect of the present invention, an edge communication device in a communication system establishing a virtual private network for communication between a plurality of customer networks by forming a tunnel on a provider network, the edge communication device being connected at input and output ends of the tunnel,
the edge communication device comprises terminating means for terminating a routing protocol used in the customer network.

The edge communication device may further comprise a table composed of VNP establishment information relating to the virtual private network and correspondence information of ports connected to the provider network and preliminarily assigned capsule addresses and IP addresses of each communication device on the customer network side,
the terminating means includes retrieving means for retrieving the table from a destination address of a packet input from the customer network and encapsulating means for encapsulating the packet on the basis of retrieved capsule address for feeding to the provider network.

The encapsulating means may encapsulate a control packet on the basis of the capsule address for other customer network belonging on the same virtual private network. The terminating means may include means for receiving and decoding the control packet generated in the customer network and means for updating data of the table according to the result of decoding. The terminating means may include means for removing capsule containing the capsule address for the packet arriving from the provider network to own device, and determining destination referring to the table on the basis of a destination IP address contained in the packet for feeding.

Also, the terminating means may be responsive to failure of a working interface for the customer network for erasing information relating to faulty interface and includes means for notifying failure to other relevant edge communication devices and use of a reserved interface. The terminating means may include means for erasing information in the table relating to the faulty interface in response to failure notice from other edge communication device and adding information relating to the reserved interface in the table in response to a notice of use of the reserved interface.

The routing protocol used in the customer network may be an open shortest path first protocol.

According to the second aspect of the present invention, a communication control method in a communication system establishing a virtual private network for communication between a plurality of customer networks by forming a tunnel between edge communication devices on a provider network , the communication control method comprising:
terminating step of terminating a routing protocol used in the customer network.

According to the third aspect of the present invention, a storage medium storing a communication control method in a communication system establishing a virtual private network for communication between a plurality of customer networks by forming a tunnel between edge communication devices on a provider network , the program comprises:
terminating step of terminating a routing protocol used in the customer network.

The edge communication device comprises a table composed of VNP establishment information relating to the virtual private network and correspondence information of ports connected to the provider network and preliminarily assigned capsule addresses and IP addresses of each communication device on the customer network side,
the terminating step may include retrieving step of retrieving the table from a destination address of a packet input from the customer network and encapsulating step of encapsulating the packet on the basis of retrieved capsule address for feeding to the provider network.

The encapsulating step may encapsulate a control packet on the basis of the capsule address for other customer network belonging on the same virtual private network.

The terminating step may includes step of removing capsule containing the capsule address for the packet arriving from said provider network to own device, and determining destination referring to the table on the basis of a destination IP address contained in the packet for feeding.

The terminating step may includes step of receiving and decoding the control packet generated in the customer network in response to adding IP address or modifying topology in the customer network, and updating data of the table according to the result of decoding.

The terminating means may be responsive to failure of a working interface for the customer network for erasing information relating to faulty interface and includes means for notifying failure to other relevant edge communication device and use of a reserved interface. The terminating step may include step of erasing information in the table relating to the faulty interface in response to failure notice from other edge communication device and adding information relating to the reserved interface in the table in response to a notice of use of the reserved interface.

A concentrated processing unit for concentrically managing the table may be provided and
the communication control method comprises:
step of uploading an updated table to the concentrated processing unit after updating data of the table according to a result of decoding of the control packet and step of downloading the table uploaded from the concentrated processing unit to the relevant edge communication devices.

### BRIEF DESCRIPTION OF THE DRAWINGS

The present invention will be understood more fully from the detailed description given hereinafter and from the accompanying drawings of the preferred embodiment of the present invention, which, however, should not be taken to be limitative to the invention, but are for explanation and understanding only.

In the drawings:
Fig. 1 is a block diagram showing a basic construction of a communication system according to the present invention;
Fig. 2 is a block diagram showing one embodiment of the communication system according to the present invention;
Fig. 3 is a schematic block diagram showing a function of an edge node in the present invention;
Fig. 4 is a conceptual illustration showing a relationship between a VR table in the edge node and an interface on the side of a provider network;
Fig. 5 is an illustration showing one example of a content of the VR table;
Fig. 6 is an illustration showing one example of a content of the VR table;
Fig. 7 is an illustration showing one example of a content of the VR table;
Fig. 8 is a sequence chart for explaining operation of one embodiment of the communication system according to the present invention;
Fig. 9 is a flowchart showing operation upon packet transfer in one embodiment of the communication system according to the present invention;
Figs. 10A to 10C are illustrations for explaining encapsulation and decapsulation;
Fig. 11 is a flowchart showing operation upon reception of capsule in one embodiment of the communication system according to the present invention;
Fig. 12 is a flowchart showing operation upon reception of a control packet in one embodiment of the communication system according to the present invention;
Fig. 13 is a flowchart showing operation upon failure of a working link in one embodiment of the communication system according to the present invention;
Fig. 14 is a flowchart showing operation upon active state of reserved link in one embodiment of the communication system according to the present invention;
Fig. 15 is a schematic block diagram showing another embodiment of the communication system according to the present invention; and
Fig. 16 is a schematic block diagram for explaining prior art.

### DESCRIPTION OF THE PREFERRED EMBODIMENT

The present invention will be discussed hereinafter in detail in terms of the preferred embodiment of the present invention with reference to the accompanying drawings. In the following description, numerous specific details are set forth in order to provide a thorough understanding of the present invention. It will be obvious, however, to those skilled in the art that the present invention may be practiced without these specific details

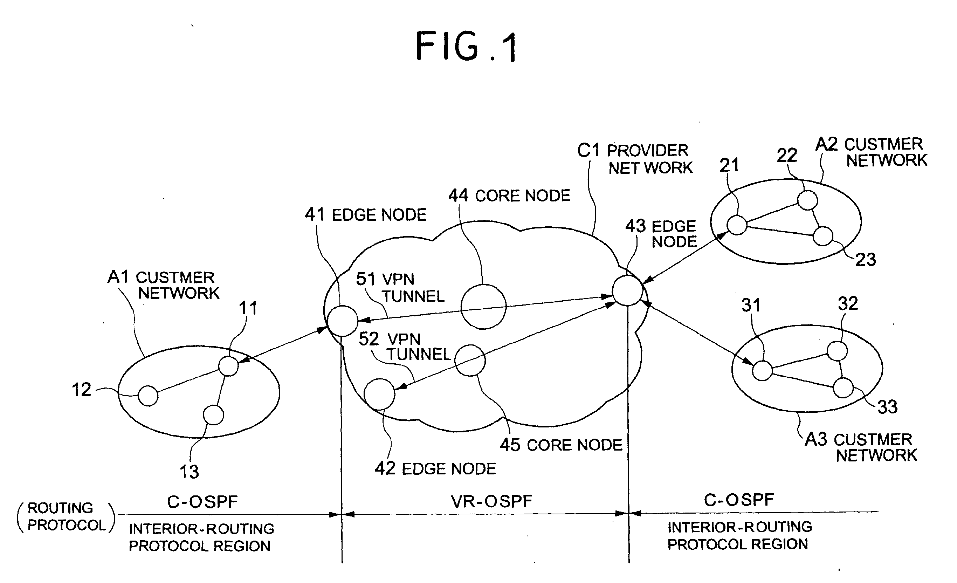

Fig. 1 is a block diagram showing a basic construction of a communication system according to the present invention. Like components to those in Fig. 16 will be identified by like reference numerals and detailed description for those common components will be eliminated for avoiding redundant discussion for simplification of the disclosure and whereby facilitating clear understanding of the present invention. A VPN system herewith proposed is constructed with a customer networks A1 to A3 which are respectively constituted of customer nodes 11 to 13, 21 to 23 and 31 to 33, and a provider network C1 constituted of core nodes 44 and 45 and edge nodes 41 to 43.

In Fig. 1, the customer network A1, the customer network A2 and the customer network A3 establish VPN with tunneling by an encapsulation process in edge nodes located on the border of the provider network C1, namely at both ends of the tunnels 51 and 52. Accordingly, the customer networks A1 to A3 belong in the same AS (Autonomous System) to update/manage a topology database of the customer node by IGPs (Interior Gateway Protocols), such as RIP (Routing Information Protocol), OSPF (Open Shortest Path First). It should be noted that, in the shown embodiment, OSPF is used as the IGPs.

On customer network side of the edge nodes 41 to 43, termination process of OSPF protocol used in the connected customer network can be performed. Therefore, as shown in Fig. 1, the customer network A1 to A3 may use C(Customer)-OSPF, and the provider network C1 may use VR(VPNRouting)-OSPF. It becomes unnecessary to use EBGP uses in the interface portion between the customer network and the provider network as shown in Fig. 16. Namely, C-OSPF control packet on the customer network side is generally transferred as the IP packet in the provider network to be a tunnel. Each C-OSPF does not perceptive of presence of VR-OSPF in the provider network. Namely, each C-OSPF belongs the same OSPF domain. As a function for realizing these or the like, in the edge node, terminating function and updating function of VR table information are provided.

On the other hand, in OSPF, it becomes possible to use so-called multi-homing, in which different metric values are set for a plurality of links for preferentially select the link having smaller metric value, for example. Therefore, multi-homing can be established between the customer network and the provider network for improving reliability.

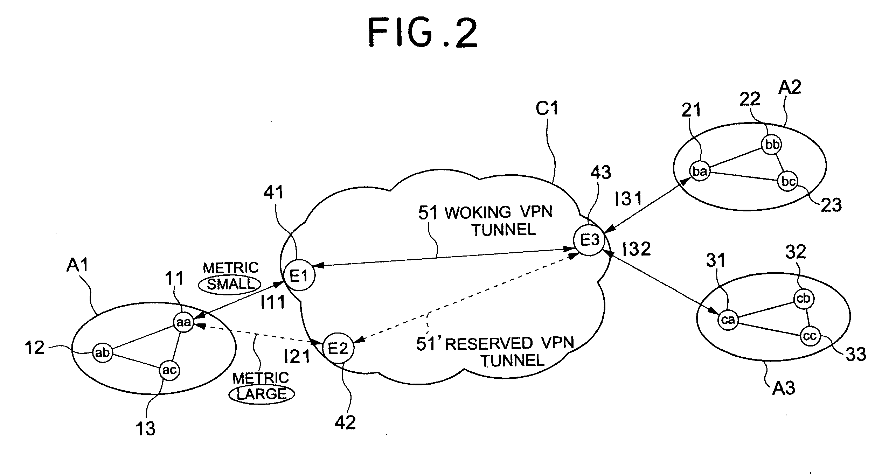

Fig. 2 is a schematic diagram of a system showing one embodiment of the communication system according to the present invention. In the following discussion in connection the construction illustrated in Fig. 2, like components to those in Fig. 1 will be identified by like reference numerals and detailed description for those common components will be eliminated for avoiding redundant discussion for simplification of the disclosure and whereby facilitating clear understanding of the present invention. It should be noted that Fig. 2 is illustrated with eliminating the core node for simplification of illustration. As shown in Fig. 2, private IP (Internet Protocol) address of the customer nodes 11 to 13 in the customer network A1 are respectively "aa", "ab" and "ac". Also, the private IP address of the customer nodes 21 to 23 of the customer network A2 are respectively "ba", "bb" and "bc". Furthermore, the private IP address of the customer nodes 31 to 33 of the customer network A3 are respectively "ca", "cb" and "cc",

Capsule addresses on the side of the provider network C1 of the edge nodes 41 to 43 are "E1" to "E3". Then, an address (private IP address) of the interface on the side of the customer network of the edge node 41 is assumed to be "I11". An IP address of the interface on the side of the customer network of the edge node 42 is assumed to be "I21". IP addresses of the interface on the side of the customer network of the edge node 43 are assumed to be "I31" and "I32".

In the shown embodiment, for the topology database (routing table for routing) in the customer network A1 for multi-homing set forth above, two private IP addresses "I11" and "I21" are preliminarily provided. In the routing protocol (OSPF) in the customer network A1, large or small relationship of the metric value with taking the provided two IP addresses "I11" and "I21" as route is set so that the value of the route of the former becomes small to select a VPN tunnel 51 routing through the IP address "I11" as working system.

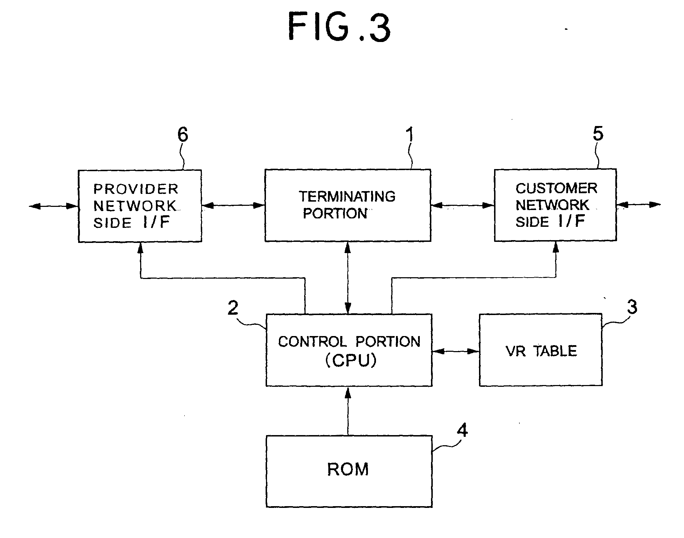

Fig. 3 is a schematic block diagram of the edge node in the communication system in Fig. 2. The edge node has a terminating portion 1 performing termination process of the packet from the customer network, a control portion (CPU) 2 controlling operation of the terminating portion and controlling routing, a table, namely VR table 3, having VPN establishment information and correspondence information of the port assigned the capsule address and the IP address of each node in the customer network, ROM 4 for preliminarily storing the operation control program( software) of the control portion, and I/F portions 5 and 6 forming is interface with the customer network.

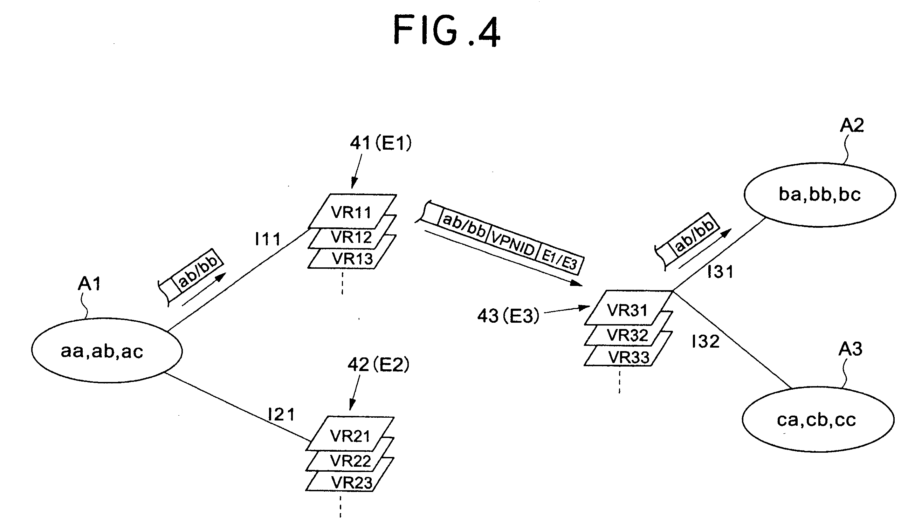

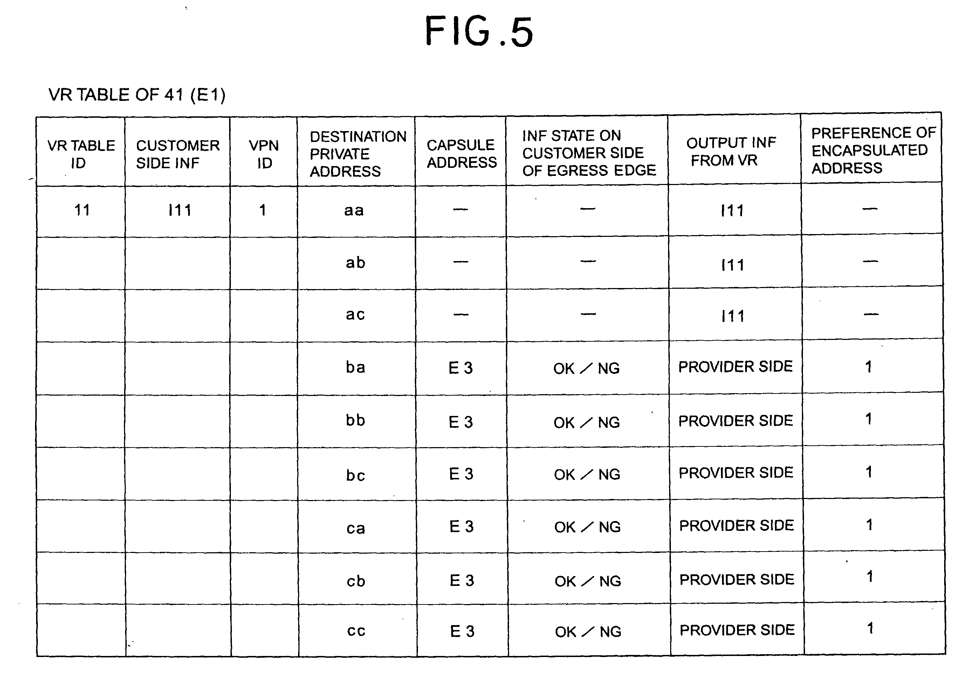

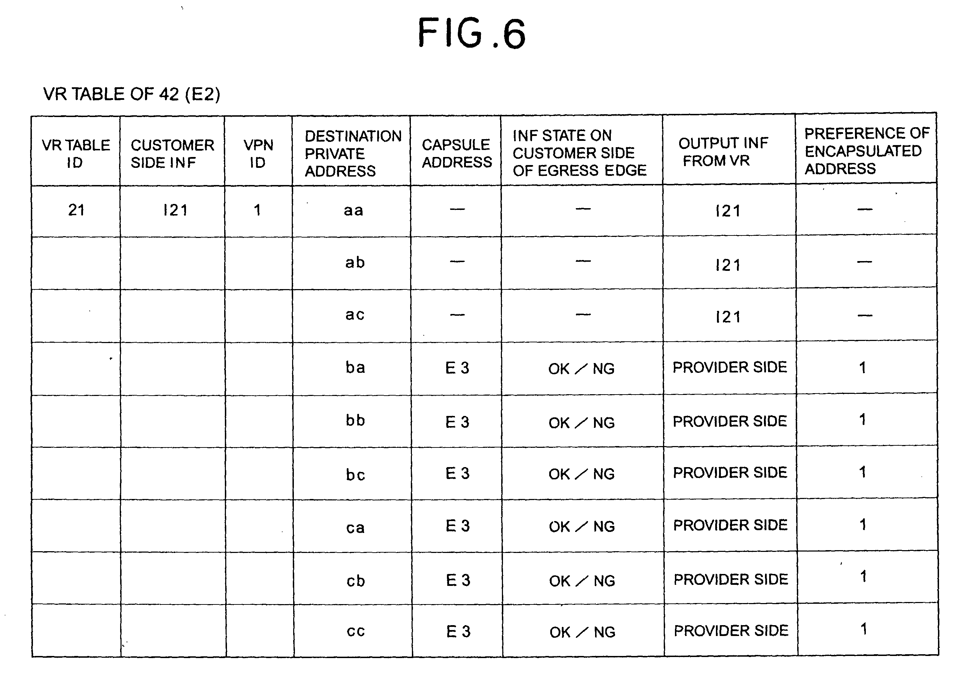

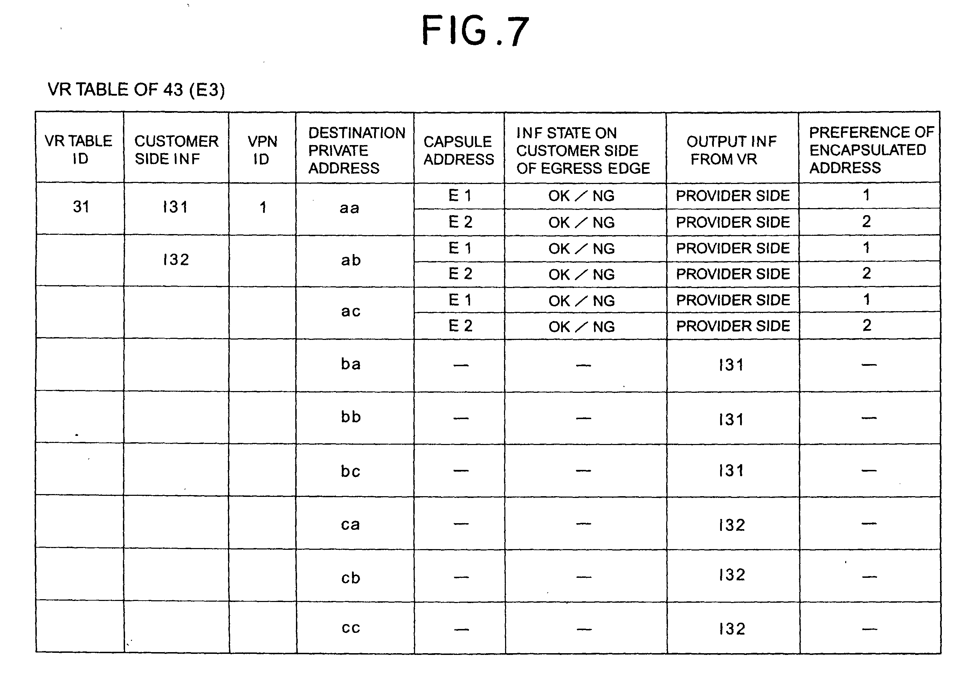

Fig. 4 is a conceptual information of the VR table for controlling routing, which is included in respective of the edge nodes 41 to 43. The VR table is variable of the content depending upon the edge node storing the same even when the same VPN (VPN information). As shown in Fig. 4, the edge node 41 has VR tables respectively corresponding to VR IDs "11", "12", "13" .... Particular example (corresponding to Fig. 2) of the VR ID "11" is illustrated in Fig. 5. On the other hand, the edge node 42 has VR tables respectively corresponding to the VR IDs of "21", "22", "23" .... Particular example (corresponding to Fig. 2) is shown in Fig. 6. Also, the edge node 43 has VR tables respectively corresponding to VR IDs "31", "32", "33" ... Particular example (corresponding to Fig. 2) is shown in Fig. 7.

These VR tables include association information of the customer network side interface (INF) which has been registered upon application to the provider network for IP-VPN service, which is inherent information for enabling use of the private address on the customer network side (It is possible that the different customer networks have the same reference numerals. In this case, the VR table is identified by from which interface on the side of the customer network the input is made). On the other hand, the VR table may contain information (OK or NG) representative of condition of the customer network side interface of an Egress (output) edge node, namely the encapsulated address is effective or not.

Furthermore, the VR table contains VPN ID. The VPN ID is a global unique information assigned to the customer who uses the VR table. Even when the VR tables have the same VPN ID, the VR tables may be different in the edge node stored therein (see Fig. 4). On the other hand, the VR table may contain preference of encapsulating address. This preferential order corresponds to the metric value, in which the preference "1" (working system) has higher preference than the preference "2" (reserved system).

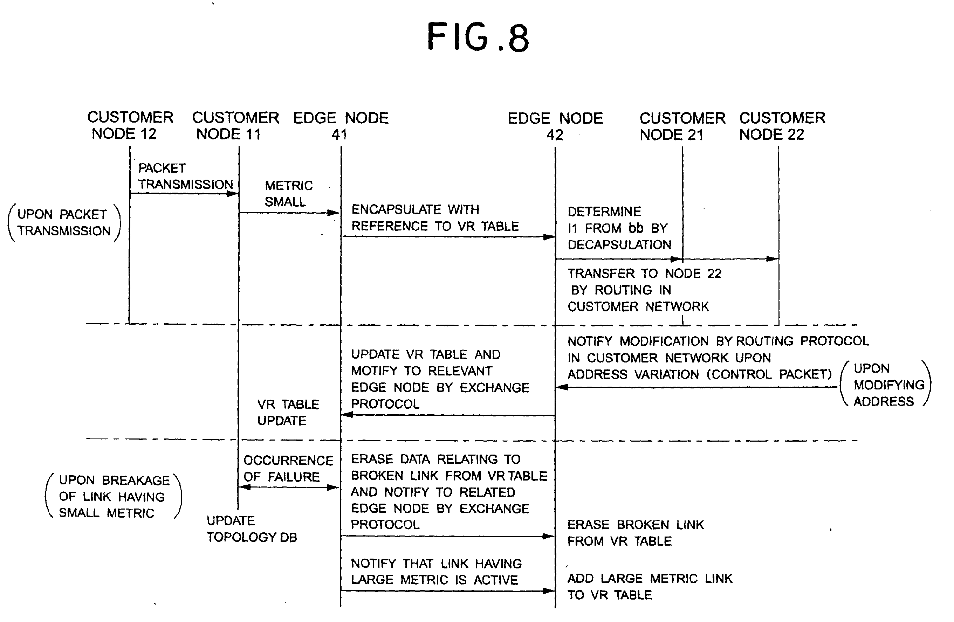

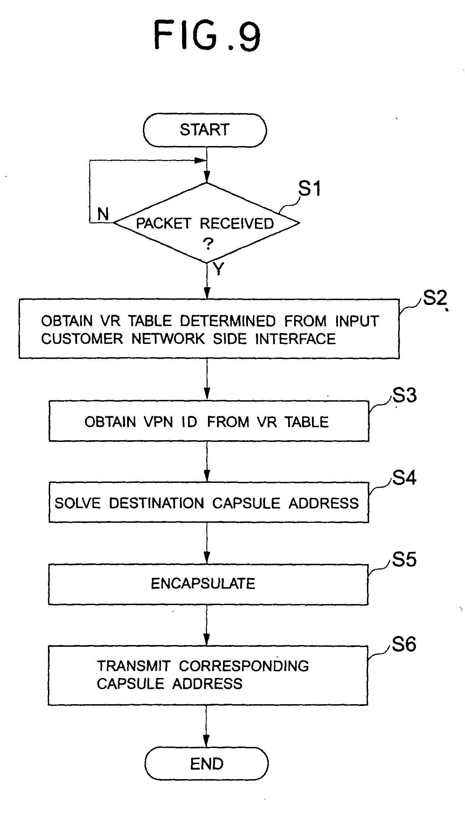

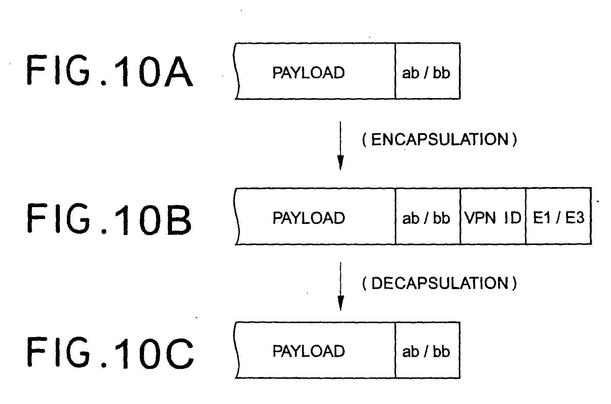

Fig. 8 is a sequential chart showing the operation of one embodiment of the communication system according to the present invention. Illustrated therein are upon packet transmission from the customer network and upon modification of the address in the customer network, and upon breakage of the link of the system having small metric value (working system) . At first, concerning transmission of the packet from the customer network, discussion will be given also with making reference to Fig. 9. For example, it is assumed that packet transmission is made from the node 12 of the customer network A1 issues demand for packet transfers to the node 22 of another customer network A2 (step S1). At this time, the packet includes ab/bb as a sender address/destination address as shown in Fig. 10A.

According to the OSPF routing protocol in the customer network A1, the packet is supplied to the edge node 41 via the mode 11, with automatically selecting the link having smaller metric value. In the edge node 41, termination process is performed. Namely, in order to solve the transfer destination of the packet, at first, the VR table (11) determined from the interface I11 on the side of the customer network, to which the packet is input, is obtained (step S2). From this VR table (11), VPN ID (1) to be included in the packet within the network determined from the VR table (11) is obtained (step S3).

Next, on the basis of the destination private address (bb) and INF state (OK) on the customer side of the Egress edge node, the encapsulation address (E3) is solved (step S4). As shown in Fig. 10B, VPN ID and E1/E3 as representing the sender encapsulated address/destination encapsulated address are added to the header to perform encapsulation(step S5). The encapsulated packet is transferred to the corresponding output INF (on the side of the provider network) (step S6) as a packet in the provider metwork.

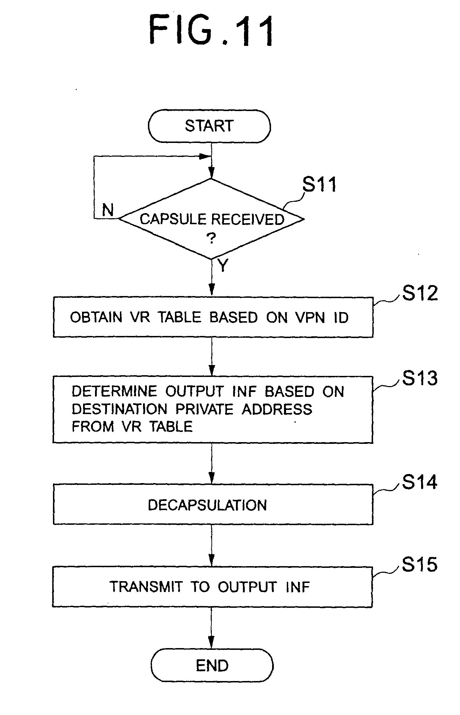

Operation of the edge node 43 in receipt of the capsule is shown in Fig. 11 in a form of flowchart. In the edge node 43, the capsule is received by the terminating portion 1 (step S11). In order to solve the problem of the packet destination in the own network, at first, on the basis of the VPN ID, the VR table (31) is obtained. Then, in the VR table (31), on the basis of the destination private IP address (bb), the corresponding output INF (I31) is determined (step S12). Then, as shown in Fig. 10C, the encapsulated address and the VPN ID are removed from the header to perform decapsulation (step S14) for transmission (step S14) and then transmitted (step S15).

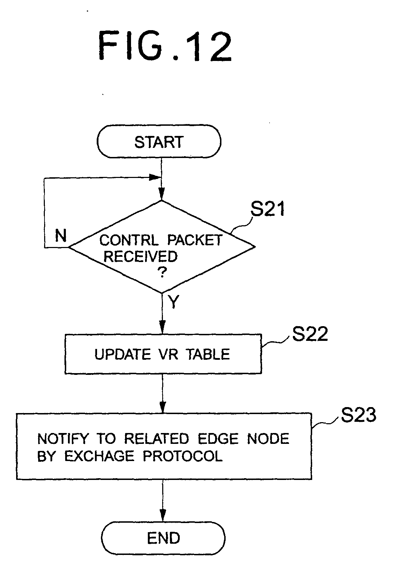

Operation when the address in the customer network is modified will be discussed with reference to the flowchart in Fig. 12. When the IP address of certain node presenting in the customer network is varied, the control packet for notifying variation is transferred through whole system (using Hello protocol or the like. The control packet is also transmitted to the corresponding edge node (step S21).

In the header portion of the control packet, since the information indicating that the packet is the control packet is preliminarily added, the terminating portion 1 may recognize the control packet by this information. The information of address modification on the control packet is decoded to update the content of the VR table (step S22). Then, using the exchange protocol for exchanging information of the VR table in the provider network, address modification is notified for the associated edge nodes (step S23).

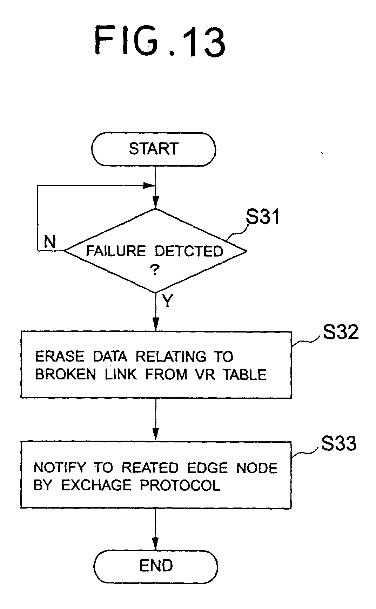

Operation when the link (having small metric value) of the interface corresponding to the working tunnel is cut off, will be discussed with reference to the flowchart of Fig. 13. When the link having small metric value is cut off, the control packet indicative of occurrence of failure is transferred through the network (using Hello protocol or the like). Therefore, in each customer node, topology DB (database) is updated.

At this time, in the edge node 41 connected to the faulty link, occurrence of failure is detected (step S31) and the information relating to the cut off link is erased from the VR table (step S32). As a method for erasure, a INF state of the customer network on the Egress side in the VR table is set at NG. By this, the information relating to the tunnel 51 becomes equivalent as erased from the table. Then, for the edge node associated, similar erasure notice is transmitted by exchange protocol to notify that the link having smaller metric value becomes active (step S33).

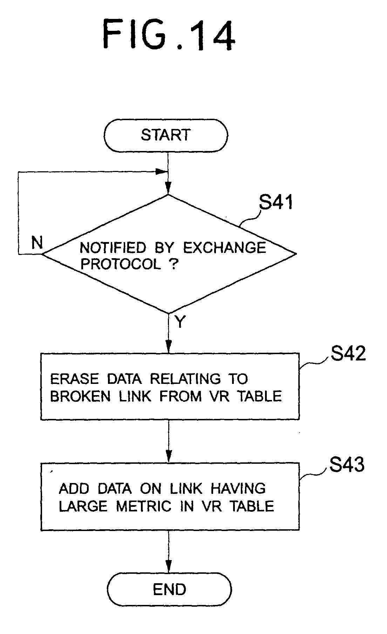

Next, reference is made to Fig. 14, when the notice at step S33 of Fig. 13 is received (step S41), the information relating to the cut off link is erased from the VR table (step S42). At the same time, by a notice that the link having large metric becomes active, the information relating to the link having large metric is added to the VR table (step S43).

Considering OSPF as IGPs, the metric value for the edge link which is desired to be used as working system is set small and the metric value of the other edge link is set large (in the metric value of VPN, there can be considered a system reflecting a route in the provider network and not reflecting the route in the provider. In the shown embodiment, the metric value does not reflect the route in the provider network on the metric value of the VPN. Accordingly, in the multi-homing structure as illustrated in Fig. 2, it is unnecessary to provide large difference in the metric value and is only required to establish a relationship of large/small).

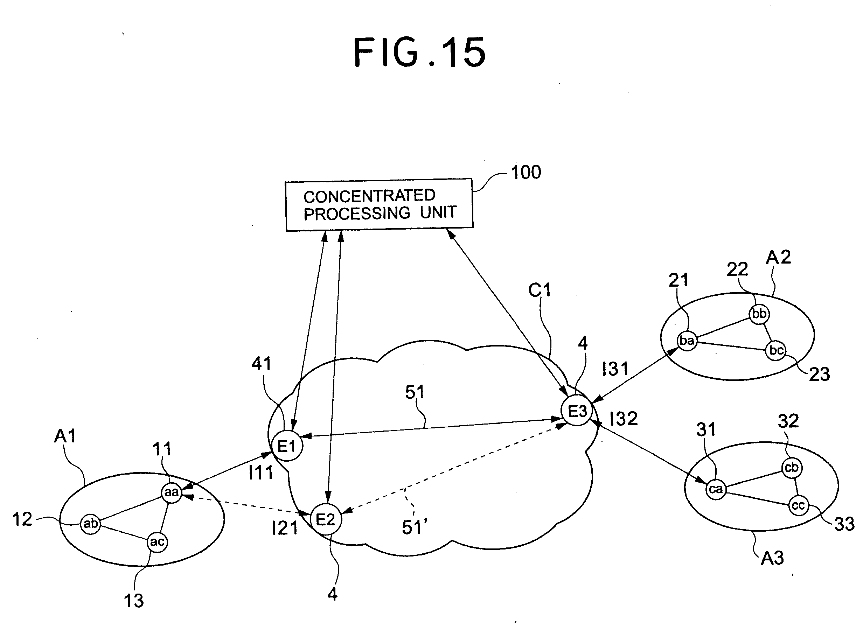

Updating of the VR table associating with modification of address or topology in the customer network, there is a system to use IBGP in the provider network and a system concentrically updating via a concentrated processing unit. Fig. 15 is an example using the central processing unit. In Fig. 15, like components to those in Fig. 2 are identified by like reference numerals and detailed description for those common components will be eliminated for avoiding redundant discussion for simplification of the disclosure and whereby facilitating clear understanding of the present invention. In the shown example, the concentrated processing unit 100 uploads VPN establishing information from one of the edge nodes, and thereafter downloads to the VR tables in the relevant edge nodes.

According to the present invention, the customer node is not required to support BGP and VPN can be established only by IGP. Also, the multi-homing construction where the customer node is connected to a plurality of edge nodes can be established without using BGP to improve reliability of VPN. Furthermore, since splitting of OSPF domain can be successfully avoided to facilitate establish an IP network on the private line using ATM or FR. Furthermore, the present invention permit connection of respective customer networks with the single OSPF domain.

Although the present invention has been illustrated and described with respect to exemplary embodiment thereof, it should be understood by those skilled in the art that the foregoing and various other changes, omission and additions may be made therein and thereto, without departing from the spirit and scope of the present invention. Therefore, the present invention should not be understood as limited to the specific embodiment set out above but to include all possible embodiments which can be embodied within a scope encompassed and equivalent thereof with respect to the feature set out in the appended claims.

## Claims

1. An edge communication device in a communication system establishing a virtual private network for communication between a plurality of customer networks by forming a tunnel on a provider network, said edge communication device being connected at input and output ends of said tunnel,
said edge communication device comprising terminating means for terminating a routing protocol used in said customer network.

2. An edge communication device as set forth in claim 1, which further comprises a table composed of VNP establishment information relating to said virtual private network and correspondence information of ports connected to said provider network and preliminarily assigned capsule addresses and IP addresses of each communication device on said customer network side,
said terminating means includes retrieving means for retrieving said table from a destination address of a packet input from said customer network and encapsulating means for encapsulating said packet on the basis of retrieved capsule address for feeding to said provider network.

3. An edge communication device as set forth in claim 2, wherein said encapsulating means encapsulates a control packet on the basis of said capsule address for other customer network belonging on the same virtual private network.

4. An edge communication device as set forth in claim 2, wherein said terminating means includes means for receiving and decoding said control packet generated in said customer network and means for updating data of said table according to the result of decoding.

5. An edge communication device as set forth in claim 2, wherein said terminating means includes means for removing capsule containing said capsule address for the packet arriving from said provider network to own device, and determining destination referring to said table on the basis of a destination IP address contained in said packet for feeding.

6. An edge communication device as set forth in claim 2, wherein said terminating means includes means for erasing information relating to faulty interface in response to failure of aworking interface for said customer network and for notifying failure to other relevant edge communication devices and use of a reserved interface.

7. An edge communication device as set forth in claim 6, wherein said terminating means includes means for erasing information in said table relating to said faulty interface in response to failure notice from other edge communication device and adding information relating to said reserved interface in said table in response to a notice of use of said reserved interface.

8. An edge communication device as set forth in claim 1, wherein the routing protocol used in said customer network is an open shortest path first protocol.

9. A communication control method in a communication system establishing a virtual private network for communication between a plurality of customer networks by forming a tunnel between edge communication devices on a provider network , said communication control method comprising:
terminating step of terminating a routing protocol used in said customer network.

10. A communication control method as set forth in claim 9, wherein said edge communication device comprises a table composed of VNP establishment information relating to said virtual private network and correspondence information of ports connected to said provider network and preliminarily assigned capsule addresses and IP addresses of each communication device on said customer network side,
said terminating step includes retrieving step of retrieving said table from a destination address of a packet input from said customer network and encapsulating step of encapsulating said packet on the basis of retrieved capsule address for feeding to said provider network.

11. A communication control method as set forth in claim 10, wherein said encapsulating step encapsulates a control packet on the basis of said capsule address for other customer network belonging on the same virtual private network.

12. A communication control method as set forth in claim 10, wherein said terminating step includes step of removing capsule containing said capsule address for the packet arriving from said provider network to own device, and determining destination referring to said table on the basis of a destination IP address contained in said packet for feeding.

13. A communication control method as set forth in claim 10, wherein said terminating step includes step of receiving and decoding said control packet generated in said customer network in response to adding IP address or modifying topology in said customer network, and updating data of said table accoding to the result of decoding.

14. A communication control method as set forth in claim 10, wherein said terminating step includes step of erasing information relating to faulty interface in response to failure of a working interface for customer network and step of notifying failure to other relevant edge communication devices and use of a reserved interface.

15. A communication control method as set forth in claim 14, wherein said terminating step includes step of erasing information in said table relating to said faulty interface in response to failure notice from other edge communication device, and adding information relating to said reserved interface in said table in response to a notice of use of said reserved interface.

16. A communication control method as set forth in claim 9, wherein the routing protocol used in said customer network is an open shortest path first protocol.

17. A communication control method as set forth in claim 13, wherein a concentrated processing unit for concentrically managing said table is provided and
said communication control method comprises:
step of uploading an updated table to said concentrated processing unit after updating data of said table according to a result of decoding of said control packet and step of downloading the table uploaded from said concentrated processing unit to the relevant edge communication device.

18. A storage medium storing a communication control method in a communication system establishing a virtual private network for communication between a plurality of customer networks by forming a tunnel between edge communication devices on a provider network , said program comprising:
terminating step of terminating a routing protocol used in said customer network.

19. A storage medium as set forth in claim 18, wherein said edge communication device comprises a table composed of VNP establishment information relating to said virtual private network and correspondence information of ports connected to said provider network and preliminarily assigned capsule addresses and IP addresses of each communication device on said customer network side,
said terminating step includes retrieving step of retrieving said table from a destination address of a packet input from said customer network and encapsulating step of encapsulating said packet on the basis of retrieved capsule address for feeding to said provider network.

20. A storage medium as set forth in claim 19, wherein said encapsulating step encapsulates a control packet on the basis of said capsule address for other customer network belonging on the same virtual private network.

21. A storage medium as set forth in claim 19, wherein said terminating step includes step of removing capsule contining said capsule address for the packet arriving from said provider network to own device, and determining destination referring said table on the basis of a destination IP address contained in said packet for feeding.

22. A storage medium as set forth in claim 19, wherein said terminating step includes step of receiving and decoding said control packet generated in said customer network in response to adding IP address or modifying topology in said customer network, and updating data of said table according to the result of decoding.

23. A storage medium as set forth in claim 19, wherein said terminating step oncludes step of erasing information relating to faulty interface in response to failure of a working interface for customer network, and step of notifying failure to other relevant edge communication devices and use of a reserved interface.

24. A storage medium as set forth in claim 23, wherein said terminating step includes step of erasing information in said table relating to said faulty interface in response to failure notice from other edge communication device and adding information relating to said reserved interface in said table in response to a notice of use of said reserved interface.

25. A storage medium as set forth in claim 18, wherein the routing protocol used in said customer network is an open shortest path first protocol.
